# EUROPÄISCHE PATENTSCHRIFT

(11) **EP 3 014 366 B1**
(45) Veröffentlichungstag und Bekanntmachung des Hinweises auf die Patenterteilung: **17.05.2017**
(21) Anmeldenummer: 14736290.9
(22) Anmeldetag: 20.06.2014
(51) Int. Cl.: G05B 15/02, H04L 12/28

(54) **EINRICHTUNG UND VERFAHREN ZUR STEUERUNG VON ELEKTRONISCH STEUERBAREN GERÄTEN UND SYSTEM IN ÖFFENTLICHEN UND PRIVATEN GEBÄUDEN**
DEVICE AND METHOD FOR CONTROLLING ELECTRONICALLY CONTROLLABLE DEVICES AND SYSTEMS IN PUBLIC AND PRIVATE BUILDINGS
DISPOSITIF ET PROCÉDÉ DE COMMANDE D'APPAREILS ET DE SYSTÈMES POUVANT ÊTRE COMMANDÉS ÉLECTRONIQUEMENT DANS DES BÂTIMENTS PUBLICS ET PRIVÉS

(30) Priorität: 27.06.2013 DE 102013010711; 27.06.2013 DE 202013005790 U
(43) Veröffentlichungstag der Anmeldung: 04.05.2016
(73) Patentinhaber: iHaus Ag, 85774 Unterföhring (DE)
(72) Erfinder: KLUG, Robert, 81377 München (DE); MEILLER, Dieter, 92280 Kastl (DE); ROTH, Hans Martin, 81377 München (DE)
(74) Vertreter: Hecht, Jan-David
(86) Internationale Anmeldenummer: PCT/EP2014/001682
(87) Internationale Veröffentlichungsnummer: WO 2014/206544

(56) Entgegenhaltungen:
- US-A1- 2002 035 404
- US-A1- 2005 097 618
- US-A1- 2008 309 513
- US-A1- 2013 103 621
- US-B1- 6 522 346

## Beschreibung

Die vorliegende Erfindung betrifft eine Einrichtung zur Steuerung von elektronisch steuerbaren Geräten und Systemen in öffentlichen und privaten Gebäuden nach dem Oberbegriff von Anspruch 1 und ein Verfahren zur Steuerung von elektronisch steuerbaren Geräten und Systemen in öffentlichen und privaten Gebäuden nach dem Oberbegriff von Anspruch 8.

Solche Einrichtungen und Verfahren zur Hausautomatisierung sind vielfältig bekannt. Dabei können bei bisherigen Hausautomationen gezielt einzelne Geräte mit geeigneten Steuerungsbefehlen angesteuert werden. US 6 522 346 B1 offenbart eine Einrichtung und Verfahren gemäß Oberbegriff der Ansprüche 1 und 8. Außerdem gibt es auch die Möglichkeit, zusammengefasst Aktionen zu konfigurieren, die dann zusammen als Steuerungsroutinen angesteuert werden können, wie dies beispielsweise durch das System Tahoma der Firma Somfy bekannt ist. Hierzu werden dezentrale Haustechnikserver mit einer zugehörigen Computerausstattung in dem entsprechenden Haus benötigt. Der Benutzer gibt diesem System dann die gewünschten Steuerungsbefehle vor und fasst diese unter einer aufrufbaren Steuerungsroutine zusammen. Dabei muss sich der Benutzer allerdings vorher überlegen, welche Steuerungsbefehle er in einer gewünschten zusammengefassten Steuerungsroutine tatsächlich durchführen will. Dies ist jedoch für die meisten Benutzer nicht oder nur sehr umständlich und unkomfortabel möglich.

Es ist die Aufgabe der vorliegenden Erfindung solche Einrichtungen und Verfahren zur Hausautomatisierung so zu verbessern, dass der Benutzer zusammengefasste Steuerungsroutinen, die seinen Wünschen entsprechen, ohne vorheriges Wissen um die Wirkung der einzelnen Steuerungsbefehle erzeugen kann. Insbesondere soll eine Hausautomation bereit gestellt werden, die dem Benutzer Steuerungsroutinen auf Wunsch vorschlägt.

Diese Aufgabe wird gelöst mit einer Einrichtung zur Steuerung von elektronisch steuerbaren Geräten und Systemen in öffentlichen und privaten Gebäuden nach Anspruch 1 und einem Verfahren zur Steuerung von elektronisch steuerbaren Geräten und Systemen in öffentlichen und privaten Gebäuden nach Anspruch : 8. Vorteilhafte Weiterbildungen sind in den abhängigen Unteransprüchen angegeben.

Die Erfinder haben erkannt, dass sich diese Aufgabe erfindungsgemäß dadurch in überraschender Weise lösen lässt, dass durchgeführte Steuerungsbefehle des Benutzers aufgezeichnet werden und der Benutzer diese aufgezeichneten Steuerungsbefehle einer Steuerungsroutine zuordnen kann.

Dadurch, dass es sich um aufgezeichnete Steuerungsbefehle handelt, also um Steuerungsbefehle, die tatsächlich zur Ansteuerung verwendet wurden, kann der Benutzer den Erfolg des Steuerungsbefehls direkt erkennen und einschätzen, ob dieser Befehl für eine sinnvolle Steuerungsroutine verwendbar ist.

Die erfindungsgemäße Einrichtung zur Steuerung von elektronisch steuerbaren Geräten und Systemen in öffentlichen und privaten Gebäuden (Hausautomatisierungseinrichtung), umfassend
- mindestens ein dem Gebäude zugeordnetes Gerät und/oder System und
- Steuerungsmittel zur Abgabe von Befehlen zur Steuerung der Funktion des Gerätes und/oder Systems,
wobei das Gerät oder System zur selektiven Änderung seines Zustands in Abhängigkeit von den Steuerungsbefehlen der Steuerungsmittel ausgebildet ist,
und zeichnet sich dadurch aus, dass Mittel zur Aufzeichnung der Steuerungsbefehle des Steuerungsmittels vorgesehen sind und Mittel zur Zuordnung vorgesehen sind, mit denen ein Benutzer einen oder mehrere der aufgezeichneten Steuerungsbefehle einer auswählbaren Steuerungsroutine zuordnen kann.

Zu den "öffentlichen und privaten Gebäuden" zählen auch diesbezügliche Grundstücke. Zweckmäßig sind Anzeigemittel vorgesehen zur Anzeige der Steuerungsbefehle in einem ausgewählten Zeitraum, insbesondere einem vergangenem Zeitraum. Dadurch kann der Benutzer gezielt Steuerungsbefehle aus einem gewünschten Zeitraum zu einer Steuerungsroutine zusammenfassen, da er nur solche Steuerungsbefehle angezeigt bekommt, die für diesen Zeitraum relevant waren.

In einer besonders bevorzugten Ausgestaltung ist vorgesehen, dass die Mittel zur Aufzeichnung der Steuerungsbefehle ausgebildet sind, nur die von dem Benutzer ausgelösten Steuerungsbefehle aufzuzeichnen. Dadurch wird dem Benutzer die Auswahl geeigneter Steuerungsbefehle erleichtert, da in den wenigsten Fällen vom Hausautomationssystem automatisch vorgenommene Steuerungen, z.B. wetterabhängige Steuerungen für eine Wiederholungsroutine geeignet sind. Allerdings kann die Aufzeichnung gerade solcher Befehle dann gezielt sinnvoll sein, wenn der Benutzer gerade solche automatischen Steuerungen weiter vervollkommnen will. Beispielsweise könnte eine temperaturabhängige Absenkungssteuerung der Heizung mit einem Anschalten einer Klimaanlage und/oder einem Ausfahren von Markisen durch den Benutzer gezielt kombiniert werden.

In einer weiteren vorteilhaften Ausgestaltung sind Mittel zur Identifikation zusammenhängender Steuerungsbefehle vorgesehen, die dem Benutzer die Zuordnung dieser zusammenhängenden Steuerungsbefehle zu der Steuerungsroutine vorschlagen. Dadurch ist es für den Benutzer nicht mehr notwendig, den Überblick über die Wirkungen der Steuerungsbefehle im Blick zu behalten, sondern es werden nur solche Steuerungsbefehle für eine Routine vorgeschlagen, die in einem Zusammenhang stehen.

In einer diesbezüglichen Weiterbildung können die Mittel zur Identifikation ausgebildet sein, Steuerungsbefehle als zusammenhängend zu identifizieren, die innerhalb einer vorgegebenen Zeit gegeben werden, wo die Zeit vorzugsweise höchstens 15 min, bevorzugt höchstens 10 min, insbesondere höchstens 5 min beträgt. Dabei wird davon ausgegangen, dass Steuerungsbefehle, die in einem engen zeitlichen Fenster gegeben werden, in einem Zusammenhang stehen, und daher auch wiederholt abgerufen werden.

Alternativ oder zusätzlich kann vorgesehen sein, dass die Mittel zur Identifikation ausgebildet sind, Steuerungsbefehle als zusammenhängend zu identifizieren, die für Systeme oder Geräte eines bestimmten Raumes gegeben werden. Dabei meint "Raum" nicht nur Zimmer oder dgl., sondern auch Freifläche, wie Garten etc.

Bei diesen Steuerungsbefehlen kann es sich ebenfalls um solche handeln, die direkt vom Benutzer selbst vorgenommen werden, oder auch um solche, die automatisch vom Hausautomationssystem vorgenommen werden, weil sie entweder schon vorab vom Benutzer programmiert wurden oder weil sie vom System selbst veranlasst werden.

Besonders vorteilhaft sind die Mittel zur Aufzeichnung so ausgebildet, dass der Startpunkt und/oder der Endpunkt der Aufzeichnung vom Benutzer festlegbar ist, wobei bevorzugt vorgesehen ist, dass die Mittel zur Zuordnung angepasst sind, alle so aufgezeichneten Steuerungsbefehle der Steuerungsroutine zuzuordnen. Dadurch kann der Benutzer auf seinen Wunsch hin gezielt eine Aufzeichnung der von ihm vorgenommenen Ansteuerungen der Geräte und Systeme vornehmen, um die Wirkungen auszuprobieren und anschließend die zugehörigen Steuerungsbefehle einer Steuerungsroutine zuordnen.

Zweckmäßig sind die Steuerungsmittel angepasst, die Steuerungsroutine automatisch zu einem vorab vorgebaren Zeitpunkt auszuführen und/oder direkt nach Aktivierung durch den Benutzer.

In einer weiteren zweckmäßigen Ausbildung ist vorgesehen, dass die Einrichtung angepasst ist, dass der Benutzer Steuerungsbefehle aus einer bestehenden Steuerungsroutine entfernen oder dieser zuordnen kann. Dadurch können Steuerungsroutinen zuerst erprobt und danach ggf. abgeändert werden.

In einer besonders bevorzugten Weiterbildung ist vorgesehen, dass die zur Steuerung der Einrichtung verwendeten Programme, Daten und/oder Routinen zentral abgespeichert vorliegen, also beispielsweise nicht auf einem dezentralen Hausserver, sondern in einer Cloud. Dadurch können durch einen eingewiesenen Techniker zum einen eine Fernkonfiguration und eine Fernwartung vorgenommen werden und zum anderen kann die Einrichtung dem Benutzer wesentlich kostengünstiger und platzsparender angeboten werden, da eine dezentrale Abspeicherung der Programme, Daten und Routinen und die redundante Vorhaltung der Speicher- bzw. Sterungstechnik zu erheblichen Mehrkosten führt. Bevorzugt handelt es sich um eine zentrale Speicherung, die der Steuerung zwei oder mehrerer Hausautomationen und/oder zwei oder mehrerer Benutzerzugriffe auf eine einzelne Hausautomation dient, z.B. durch eine mandantenfähige Cloudlösung.

Selbständiger Schutz wird beansprucht für das erfindungsgemäße Verfahren zur Steuerung von elektronisch steuerbaren Geräten und Systemen in öffentlichen und privaten Gebäuden (Hausautomatisierungsverfahren), wobei mindestens ein dem Gebäude zugeordnetes Gerät und/oder System und Steuerungsmittel zur Abgabe von Befehlen zur Steuerung der Funktion des Gerätes und/oder Systems vorgesehen sind, wobei das Gerät oder System zur selektiven Änderung seines Zustands in Abhängigkeit von den Steuerungsbefehlen der Steuerungsmittel ausgebildet ist, wobei das Verfahren sich dadurch auszeichnet, dass die Steuerungsbefehle des Steuerungsmittels aufgezeichnet werden und ein Benutzer einen oder mehrere der aufgezeichneten Steuerungsbefehle einer auswählbaren Steuerungsroutine zuordnen kann.

Die beschrieben Merkmale können ohne weiteres beliebig miteinander kombiniert werden, wenn nichts anders angegeben ist. Insbesondere können Merkmale der Einrichtung als Merkmale des Verfahrens Verwendung finden und Merkmale des Verfahrens können als Merkmale der Einrichtung Verwendung finden.

Die Merkmale und Kennzeichen sowie weitere Vorteile der vorliegenden Erfindung werden im Folgenden anhand der Beschreibung bevorzugter Ausführungsbeispiele im Zusammenhang mit den Figuren deutlich werden. Rein schematisch zeigen dabei:
- Fig. 1: ein Diagramm zum Aufbau der Datenbankstruktur der erfindungsgemäßen Einrichtung,
- Fig. 2: ein Blockschaltbild zu den Elementen der der erfindungsgemäßen Einrichtung nach Fig. 1,
- Fig. 3a, 3b: eine Anzeige aufgezeichneter Steuerungsbefehle innerhalb eines Zeitfensters mit Identifikation zusammengehöriger Steuerungsbefehle,
- Fig. 4: ein Schema zum Editieren erstellter Steuerungsroutinen,

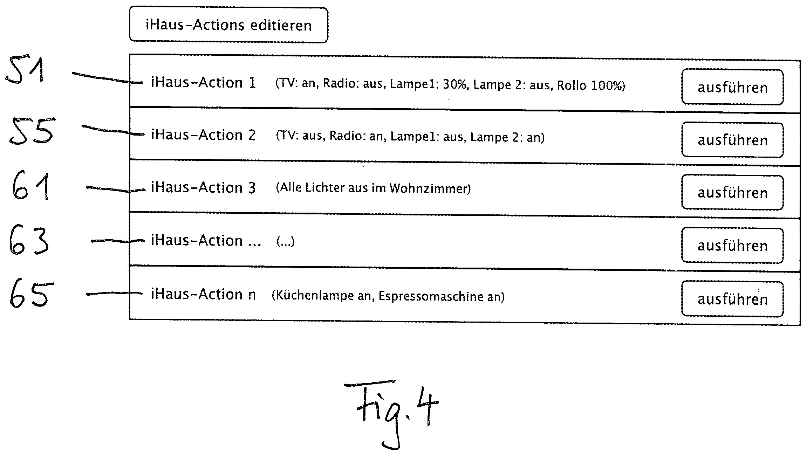

- Fig. 4: ein Bedienfeld zur manuellen Aufzeichnung vorgenommener Steuerungsbefehle und

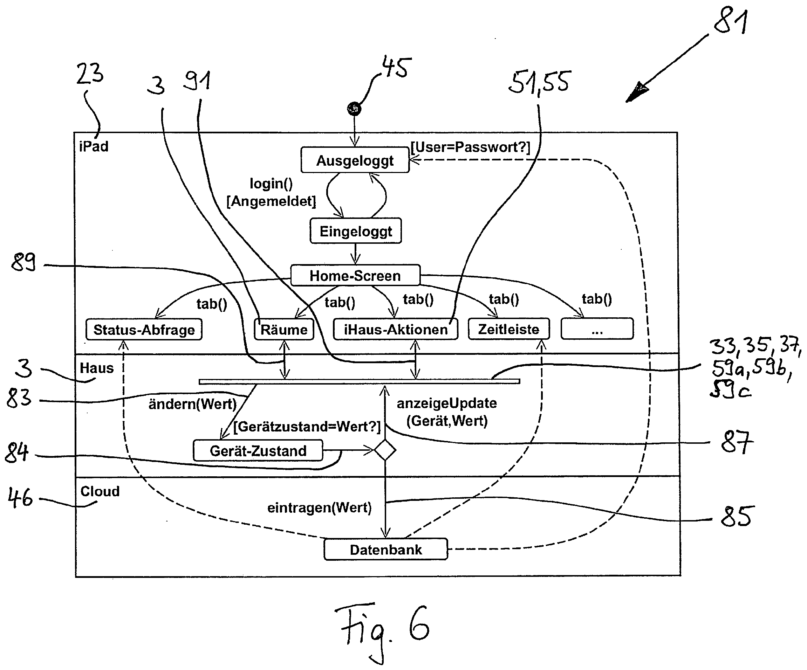

- Fig. 6: ein Diagramm zur Ausführung des erfindungsgemäßen Verfahrens.

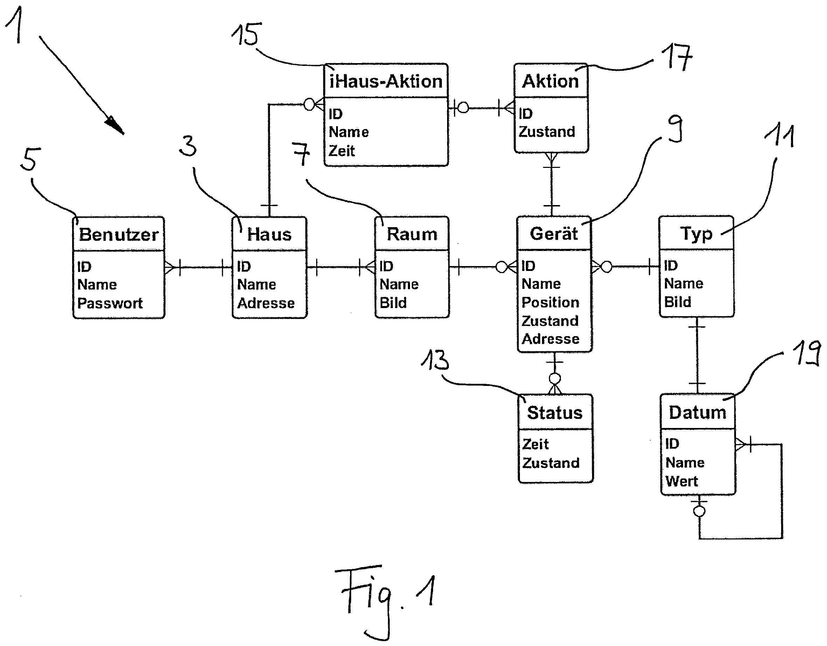

In Fig. 1 ist das Datenbank-Schema und damit der Aufbau der Cloud-Datenstruktur einer erfindungsgemäßen Einrichtung 1 zur Steuerung von elektronisch steuerbaren Geräten und Systemen in öffentlichen und privaten Gebäuden (Hausautomatisierungsvorrichtung) rein schematisch gezeigt.

Es sind folgende Beziehungen zu erkennen: pro Haus 3 kann es einen oder mehrere Benutzer 5 geben. Jedes Haus 3 hat einen oder mehrere Räume 7. Ebenso kann es mehrere Geräte 9 pro Raum 7 geben. Jedes Gerät 9 hat genau einen Typ 11. Jedes Gerät 9 verfügt über eine Liste der vergangenen Zustände 13. Jede Steuerungsroutine ("iHaus-Actions") 15 kann aus mehreren Steuerungsbefehlen ("Action") 17 von ein oder mehreren Geräten 9 bestehen. Jedes Haus 3 kann dann über eine solche Steuerungsroutine 15 gezielt gesteuert werden. Dabei sind Haus 3, Benutzer 5, Raum 7, Gerät 9, Typ 11, Steuerungsroutine 15, Steuerungsbefehl 17 und Datum 19 jeweils eigene Identifikationsnummern zugeordnet ("ID"), ggf. ein eigener Name ("Name") und ein zugehöriges Datum ("Datum") gegeben. Jedem Benutzer 5 kann weiterhin ein eigenes Passwort ("Passwort"), jedem Haus 3 eine eigen Adresse ("Adresse"), jedem Raum ein eigenes Bild ("Bild"), jedem Gerät eine eigene Position ("Position"), ein eigener Zustand ("Zustand") und eine steuerungstechnische Adresse ("Adresse") und jedem Typ (Geräte-Typ) ("Typ") ein eigenes Logo ("Icon") zugeordnet werden, die der Steuerung und Bedienung dienen. Jeder Geräte-Typ ("Typ) hat einen bestimmten Datentyp ("Datum") als Grundlage. Ein Datentyp kann beispielsweise nur "an/aus" sein oder ein Intervall [0;1], wie es unter anderm für Dimmlampen und Rollos sinnvoll ist, da dort Zwischenstufen möglich sind. Weitere Datentypen sind denkbar. So könnte ein Fernseher eine Programm-Menge als Datentyp haben, also die gespeicherten Sender.

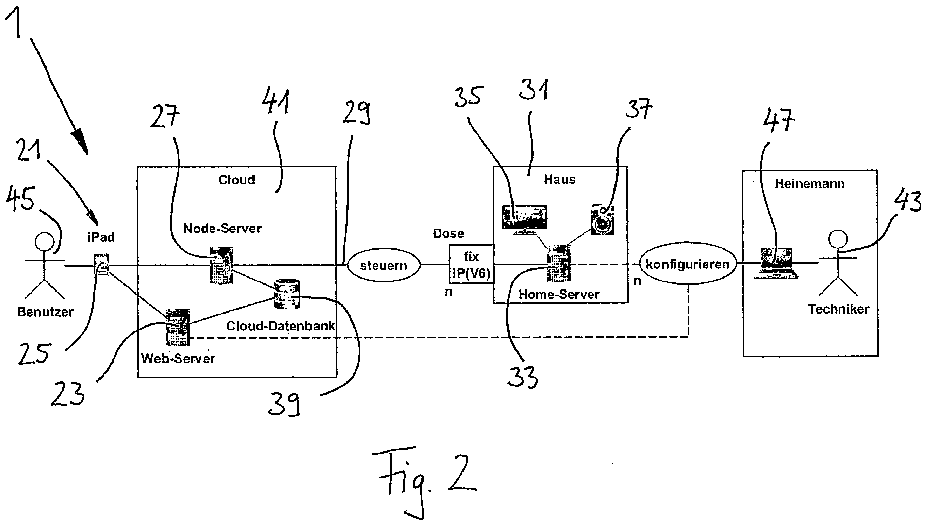

In Fig. 2 ist rein schematisch ein Blockschaltbild zu den Elementen der erfindungsgemäßen Einrichtung 1 nach Fig. 1 gezeigt. Es ist zu erkennen, dass eine Client-Software 21 vorgesehen ist, die über das Internet von einem Web-Server 23 an ein Tablet 25 oder einen sonstigen Client geliefert wird. Dieser Client 25 kommuniziert mit einem Socket-Server 27 (beispielsweise einem Node-Server), der eine stehende TCP-Verbindung 29 (oder jede andere geeignete Art von Kabel gebundener oder drahtloser Verbindung) zu in einem Haus 31 befindlichen Geräten (beispielsweise einem Home-Server 33 mit angeschlossenen Unterhaltungselektronikgeräten in Form eines Fernsehers 35 und einer Musikanlage 37) aufbauen kann. Dieser Socket-Server 27 wartet auf Nachrichten (beispielsweise Statusmeldungen) der Geräte 33, 35, 37 des jeweiligen Hauses 31, und meldet diese an den Client 25. Bei erfolgreicher Rückmeldung veranlasst dann dieser Client 25 eine Eintragsänderung in der Datenbank 39 der Cloud 41.

Ein eingewiesener Techniker 43 richtet die Software ein und konfiguriert diese. Eine Konfiguration durch den Benutzer 45 ist nicht erwünscht. Eine spezielle Administrations-Oberfläche 47 ist für diesen Techniker 43 vorgesehen. Der Techniker 43 konfiguriert darüber hinaus die Haus-Geräte 33, 35, 37 über den Home-Server 33 und die Datenbank 39 über den Web-Server 23.

Alle Benutzeraktionen und damit verbunden Steuerungsbefehle werden zentral in der Datenbank 39 in der Cloud 41 gespeichert, so dass eine dezentrale Speicherung pro Haus 31 nicht erforderlich ist.

Die erfindungsgemäß verwendeten Steuerungsroutinen (iHaus-Actions) sind zusammengefasste, in einem bestimmten Zeitraum stattfindende Steuerungsbefehle (Action) ein oder mehrerer Geräte 33, 35, 37. Dabei werden bevorzugt nur die vom Benutzer 45 durchgeführten Steuerungsbefehle betrachtet, da es um die Auswertung der Benutzer-Gewohnheiten geht.

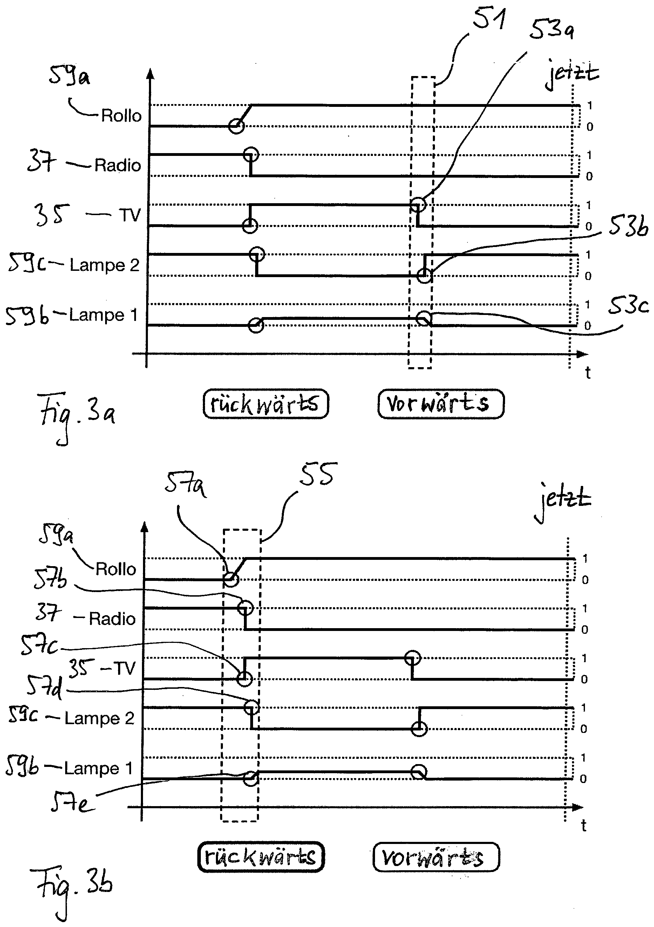

In den Fig. 3a, 3b sind rein schematisch aufgezeichnete Steuerungsbefehle innerhalb eines Zeitfensters mit Identifikation zusammengehöriger Steuerungsbefehle gezeigt, wodurch solche Benutzergewohnheiten im Zusammenhang mit der Steuerungsroutine "TV-Nachrichten" verdeutlicht werden.

Es ist zu erkennen, dass im Hinblick auf das Betrachten von Nachrichten im Fernsehen in kurzer Zeit verschiedene, vermutlich zusammengehörende Aktionen durchgeführt werden: Ein Rollo des Raumes, in dem Fernsehen geschaut wird, wird geschlossen, ein Radio in diesem Raum ausgeschaltet, das Fernsehen eingeschaltet, eine Lampe im Raum ausgeschaltet, eine andere Lampe in diesem Raum gedimmt (vgl. Fig. 3a). Manche dieser Steuerungsbefehle werden nach der Nachrichtensendung wieder in umgekehrter Reihenfolge ausgeführt, jedoch nicht alle. Das Rollo bleibt beispielsweise geschlossen (vgl. Fig. 3b).

Die erfindungsgemäße Einrichtung 1 zeichnet alle über die Bedienoberfläche des Tablets 25 (und bevorzugt nur diese) durchgeführten Steuerungsbefehle auf. Beim Aufrufen (vgl. Fig. 6) der "Timeline"-Ansicht werden alle ab der aktuellen Uhrzeit durchgeführten früheren Steuerungsbefehle dargestellt (vgl. Fig. 3a, 3b). Vorausgewählt für eine zusammenfassende erste Steuerungsroutine 51 sind die letzten durchgeführten Steuerungsbefehle 53a, 53b, 53c, die innerhalb eines bestimmten Zeitraums (z.B. Toleranzwert von 5 Minuten, entspricht der Breite der Markierung 51 der erste Steuerungsroutine 51) ausgeführt wurden.

Der Benutzer 45 hat nun die Möglichkeit, diese Steuerungsbefehle 53a, 53b, 53c als eine erste Steuerungsroutine 51 unter einem bestimmten Namen abzuspeichern.

Mithilfe von Bedienelementen "vorwärts" und "rückwärts" kann der Benutzer 45 sich weitere Vorschläge für passende Steuerungsroutinen 55 geben lassen, wobei wiederum die nächsten, weiter zurückliegenden, innerhalb des Toleranzwertes hintereinander ausgeführten Steuerungsbefehle 57a, 57b, 57c, 57d, 57e markiert sind 55 (vgl. Fig. 3b). Auch diese Steuerungsroutinen 55 können gegebenenfalls vom Benutzer 45 gespeichert werden.

So können hinsichtlich der Figuren 3a und 3b beispielsweise die entsprechenden Steuerungsroutinen "TV-Nachrichten ENDE" 51 und "TV-Nachrichten BEGINN" 55 festgelegt und gespeichert werden.

Weiterhin gibt es die Möglichkeit, diese Toleranzen also die Markierungen 51, 57 per Finger-Wischen zu vergrößern oder zu verkleinern, so dass mehr oder weniger Steuerungsbefehle 53a, 53b, 53c, 57a, 57b, 57c, 57d, 57e einem Vorschlag für eine Steuerungsroutine 51, 55 zugeordnet werden. Außerdem besteht die Möglichkeit, Geräte 33, 35, 37, 59a, 59b, 59c aus der Auswahl zu entfernen oder die zugehörigen Steuerungsparameter per Eingabe anzupassen.

Falls der Benutzer sofort oder später durch Anwendung der Steuerungsroutine 51, 55 erkennt, dass ein bestimmter Steuerungsbefehl 53, 57 nicht sinnvoll innerhalb dieser Steuerungsroutine 51, 55 eingesetzt wird, dann kann der Benutzer 45 diesen Steuerungsbefehl 53a, 53b, 53c, 57a, 57b, 57c, 57d, 57e sofort oder später aus der Steuerungsroutine 51, 55 entfernen oder geeignet anpassen (beispielsweise das Licht der anderen Lampe 59b stärker dimmen).

Für eine solche Entfernung oder Anpassung bestimmter Steuerungsbefehle in einer Steuerungsroutine 51, 55, 61, 63, 65 ist es gemäß Fig. 4 erfindungsgemäß vorgesehen, dass die gesamte Steuerungsroutine 51, 55, 61, 63, 65 ausgeführt wird ("ausführen"), so dass Entfernungen, Hinzufügungen und/oder Änderungen bestimmter Steuerungsbefehle in ihrer Wirkung direkt nachvollzogen werden können.

Außerdem besteht die Möglichkeit, eine Steuerungsroutine 51, 55, 59, 61, 63 zu einem bestimmten Zeitpunkt auszuführen. Hierzu kann man einen Zeitpunkt des Starts und des Endes der Steuerungsroutine 51, 55, 59, 61, 63 eingeben und auch angeben, in welchem Intervall die Steuerungsroutine 51, 55, 59, 61, 63 ausgeführt werden soll (beispielsweise einmal, täglich, wöchentlich, monatlich).

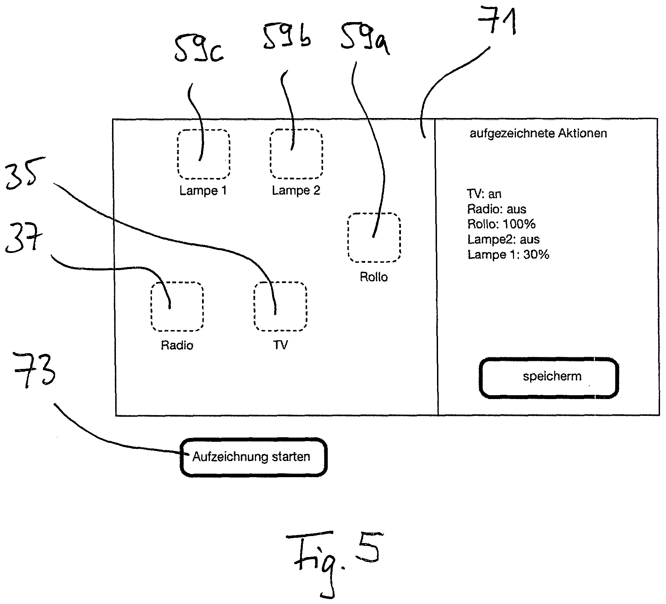

Eine alternative bzw. zusätzliche Möglichkeit Steuerungsroutinen zu erstellen ist in Fig. 5 rein schematisch gezeigt. Genauer gesagt ist in Fig. 5 ein Bedienfeld 71 zur manuellen Aufzeichnung vorgenommener Steuerungsbefehle dargestellt. Es ist zu erkennen, dass der Benutzer 45 für einen bestimmten Raum (vgl. Fig. 6 "Räume") eine Aufzeichnung 73 aller selbst vorgenommenen Steuerungsbefehle für die Hausgeräte 35, 37, 59a, 59b, 59c während deren Ausführung vornehmen kann. Die so aus geführten Steuerungsbefehle ("aufgezeichnete Aktionen") können dann als neue Steuerungsroutine gespeichert werden ("speichern"), die wiederum auch editierbar ist (vgl. Fig. 4).

In Fig. 6 ist noch einmal in einem Diagramm rein schematisch die Ausführung des erfindungsgemäßen Verfahrens 81 dargestellt.

Es ist zu erkennen, dass sich der Benutzer 45 bei der Einrichtung 1 anmeldet ("login()") und auf seinem Tablet 23 einen Empfangsbildschirm ("Home-Screen") sieht. Über diesen Empfangsbildschirm ("Home-Screen") kann er durch Antippen ("tab()") in Menüs zur Statusabfrage ("Status-Abfrage") ohne Zustandsänderung der einzelnen Geräte 33, 35, 37, 59a, 59b, 59c, zu den einzelnen Räumen 3, zu den vorhandenen Steuerungsroutinen 51, 55 ("iHaus-Actions") und zur dauernden Aufzeichnung von Steuerungsbefehlen ("Time-Line") gelangen.

Auf der Ebene des Hauses 3 werden Geräte-Zustände ("Geräte-Zustand") von den Geräten 33, 35, 37, 59a, 59b, 59c geändert 83 und ausgelesen 84 und einer in der Cloud 41 befindlichen Datenbank ("Datenbank") zugeführt 85 und gleichzeitig ggf. am Gerät 33, 35, 37, 59a, 59b, 59c angezeigt 87. Über die Menüs Räume ("Räume") und Steuerungsroutinen ("iHaus-Actions") kann direkt Einfluss 89, 91 auf die Zustände der Geräte 33, 35, 37, 59a, 59b, 59c genommen werden und derzeitigen Zustände angezeigt 89, 91 werden.

Aus der in der Cloud 41 befindlichen Datenbank 39 werden die Informationen bei der Statusabfrage ("Status-Abfrage"), der dauernden Aufzeichnung von Steuerungsbefehlen ("Time-Line") und zur Überprüfung der Passworts jedes Benutzers 45 zur Verfügung gestellt.

Aus der vorstehenden Darstellung sind die zahlreichen Vorteile der vorliegenden Erfindung deutlich geworden.

So können regelmäßig wiederkehrende Steuerungsbefehle durch eine visuelle Darstellung erkannt und dann in Steuerungsroutinen zusammengeführt werden.

Da die Steuerungsbefehle vor der Zuführung zu einer Steuerungsroutine stets ausgeführt werden, benötigt der Benutzer 45 keine tieferen Kenntnisse über die Wirkungsweise bzw. das Zusammenwirken verschiedener Steuerungsbefehle. Dies gilt auch für die Editierung schon bestehender Steuerungsroutinen.

Durch die Zusammenfassung der Steuerungsbefehle zu einer abstrakten, höheren Steuerungsroutine können Abläufe im Haus vereinfacht werden, da sie mit einem einzelnen Kommando ausgelöst werden können. Dies bietet mehr Komfort und Zeitersparnis als die gesonderte Ausführung der Steuerungsbefehle.

Zudem bekommt der Benutzer einen besseren Überblick der im Haus 3 vorgenommenen Steuerungsbefehle. Dies führt zu einer effizienteren Ausnutzung der Hausautomation und dadurch auch zu einer Energie-Einsparung.

Da die Steuerungsroutinen vom Benutzer 45 explizit ausgelöst werden und nicht von vornherein automatisch von der Hausautomation, hat der Benutzer 45 das Gefühl vollständiger Kontrolle.

### Bezugszeichenliste

- 1: erfindungsgemäße Einrichtung zur Steuerung
- 3: Haus
- 5: Benutzer
- 7: Räume
- 9: Gerät
- 11: Geräte-Typ
- 13: Liste der vergangenen Zustände
- 15: Steuerungsroutine
- 17: Steuerungsbefehle
- 19: Datum
- 21: Client-Software
- 23: Web-Server
- 25: Tablet
- 27: Socket-Server
- 29: TCP-Verbindung
- 31: Haus
- 33: Home-Server
- 35: Fernsehers
- 37: Musikanlage
- 39: Datenbank
- 41: Cloud
- 43: Techniker
- 45: Benutzer
- 47: Administrations-Oberfläche
- 51: erste Steuerungsroutine, Markierung
- 53a, 53b, 53c: Steuerungsbefehle
- 55: Steuerungsroutine
- 57a, 57b, 57c, 57d, 57e: Steuerungsbefehle
- 59a, 59b, 59c: Geräte
- 61, 63, 65: Steuerungsroutinen
- 71: Bedienfeld
- 73: Aufzeichnung
- 81: erfindungsgemäßes Verfahren zur Steuerung
- 83: Änderung von Gerätezuständen
- 84: Auslesen von Gerätezuständen
- 85: Zuführung von Gerätezuständen zur Datenbank
- 87: Anzeige von Gerätezuständen
- 89, 91: Einflussnahme auf und Anzeige von Gerätezuständen

## Patentansprüche

1. Einrichtung (1) zur Steuerung von elektronisch steuerbaren Geräten (33, 35, 37, 59a, 59b, 59c) und Systemen in öffentlichen und privaten Gebäuden (3, 31), umfassend mindestens ein dem Gebäude (3, 31) zugeordnetes Gerät (33, 35, 37, 59a, 59b, 59c) und/oder System und Steuerungsmittel (23, 25, 27, 41) zur Abgabe von Befehlen (17, 53a, 53b, 53c, 57a, 57b, 57c, 57d, 57e) zur Steuerung der Funktion des Gerätes (33, 35, 37, 59a, 59b, 59c) und/oder Systems, wobei das Gerät (33, 35, 37, 59a, 59b, 59c) oder System zur selektiven Änderung seines Zustands in Abhängigkeit von den Steuerungsbefehlen der Steuerungsmittel (23, 25, 27, 41) ausgebildet ist, wobei Mittel zur Aufzeichnung (23, 25, 39) der Steuerungsbefehle (17, 53a, 53b, 53c, 57a, 57b, 57c, 57d, 57e) des Steuerungsmittels (23, 25, 27, 41) vorgesehen sind und Mittel zur Zuordnung (23, 25, 39) vorgesehen sind, mit denen ein Benutzer (45) der Einrichtung (1) einen oder mehrere der aufgezeichneten Steuerungsbefehle (17, 53a, 53b, 53c, 57a, 57b, 57c, 57d, 57e) einer auswählbaren Steuerungsroutine (15, 51, 55) zuordnen kann, **dadurch gekennzeichnet, dass** Mittel zur Identifikation (23, 25) zusammenhängender Steuerungsbefehle (53a, 53b, 53c, 57a, 57b, 57c, 57d, 57e) vorgesehen sind, die dem Benutzer (45) die Zuordnung dieser zusammenhängenden Steuerungsbefehle (53a, 53b, 53c, 57a, 57b, 57c, 57d, 57e) zu der Steuerungsroutine (51, 55) vorschlagen, wobei die Mittel zur Identifikation (23, 25) ausgebildet sind, Steuerungsbefehle (53a, 53b, 53c, 57a, 57b, 57c, 57d, 57e) als zusammenhängend zu identifizieren, die innerhalb einer vorgegebenen Zeit und/oder die für Systeme oder Geräte (35, 37, 59a, 59b, 59c) eines bestimmten Raumes (7) gegeben werden.

2. Einrichtung (1) nach Anspruch 1, **dadurch gekennzeichnet, dass** Anzeigemittel (25) vorgesehen sind zur Anzeige der Steuerungsbefehle (17, 53a, 53b, 53c, 57a, 57b, 57c, 57d, 57e) in einem ausgewählten Zeitraum, insbesondere einem vergangenem Zeitraum.

3. Einrichtung (1) nach Anspruch 1 oder 2, **dadurch gekennzeichnet, dass** die Mittel zur Aufzeichnung (23, 25, 39) der Steuerungsbefehle (17, 53a, 53b, 53c, 57a, 57b, 57c, 57d, 57e) ausgebildet sind, nur die von dem Benutzer (45) ausgelösten Steuerungsbefehle (17, 53a, 53b, 53c, 57a, 57b, 57c, 57d, 57e) aufzuzeichnen.

4. Einrichtung (1) nach einem der vorherigen Ansprüche, **dadurch gekennzeichnet, dass** die vorgegebene Zeit höchstens 15 min, bevorzugt höchstens 10 min, insbesondere höchstens 5 min beträgt.

5. Einrichtung (1) nach einem der vorherigen Ansprüche, **dadurch gekennzeichnet, dass** die Mittel zur Aufzeichnung (23, 25) so ausgebildet sind, dass der Startpunkt und/oder der Endpunkt der Aufzeichnung vom Benutzer (45) festlegbar ist, wobei bevorzugt vorgesehen ist, dass die Mittel zur Zuordnung (23, 25) angepasst sind, alle so aufgezeichneten Steuerungsbefehle der Steuerungsroutine zuzuordnen.

6. Einrichtung (1) nach einem der vorherigen Ansprüche, **dadurch gekennzeichnet, dass** die Steuerungsmittel (23, 25, 27, 41) angepasst sind, die Steuerungsroutine (15, 51, 55) automatisch zu einem vorab vorgebaren Zeitpunkt auszuführen und/oder direkt nach Aktivierung durch den Benutzer (45).

7. Einrichtung (1) nach einem der vorherigen Ansprüche, **dadurch gekennzeichnet, dass** die Einrichtung (1) angepasst ist, dass der Benutzer (45) Steuerungsbefehle (17, 53a, 53b, 53c, 57a, 57b, 57c, 57d, 57e) aus einer bestehenden Steuerungsroutine (15, 51, 55) entfernen oder dieser zuordnen kann.

8. Verfahren zur Steuerung von elektronisch steuerbaren Geräten (33, 35, 37, 59a, 59b, 59c) und Systemen in öffentlichen und privaten Gebäuden (3, 31), wobei mindestens ein dem Gebäude (3, 31) zugeordnetes Gerät (33, 35, 37, 59a, 59b, 59c) und/oder System und Steuerungsmittel (23, 25, 27, 41) zur Abgabe von Befehlen (17, 53a, 53b, 53c, 57a, 57b, 57c, 57d, 57e) zur Steuerung der Funktion des Gerätes (33, 35, 37, 59a, 59b, 59c) und/oder Systems vorgesehen sind, wobei das Gerät oder System zur selektiven Änderung seines Zustands in Abhängigkeit von den Steuerungsbefehlen (17, 53a, 53b, 53c, 57a, 57b, 57c, 57d, 57e) der Steuerungsmittel (23, 25, 27, 41) ausgebildet ist, wobei die Steuerungsbefehle (17, 53a, 53b, 53c, 57a, 57b, 57c, 57d, 57e) des Steuerungsmittels (23, 25, 27, 41) aufgezeichnet werden und ein Benutzer (45) des Verfahrens einen oder mehrere der aufgezeichneten Steuerungsbefehle (17, 53a, 53b, 53c, 57a, 57b, 57c, 57d, 57e) einer auswählbaren Steuerungsroutine (15, 51, 55) zuordnen kann, **dadurch gekennzeichnet, dass** zusammenhängende Steuerungsbefehle (53a, 53b, 53c, 57a, 57b, 57c, 57d, 57e) identifiziert (23, 25) und dem Benutzer (45) die Zuordnung dieser zusammenhängenden Steuerungsbefehle (53a, 53b, 53c, 57a, 57b, 57c, 57d, 57e) zu der Steuerungsroutine (51, 55) vorschlagen werden, wobei die Steuerungsbefehle (53a, 53b, 53c, 57a, 57b, 57c, 57d, 57e) als zusammenhängend identifiziert werden, die innerhalb einer vorgegebenen Zeit und/oder die für Systeme oder Geräte (35, 37, 59a, 59b, 59c) eines bestimmten Raumes (7) gegeben werden.

9. Verfahren nach Anspruch 8, **dadurch gekennzeichnet, dass** die Einrichtung (1) nach einem der Ansprüche 1 bis 7 verwendet wird.

## Claims

1. Arrangement (1) for controlling electronically controllable devices (33, 35, 37, 59a, 59b, 59c) and systems in public and private buildings (3, 31), comprising
at least one device (33, 35, 37, 51, 59b, 59c) and/or system and control device (23, 25, 27, 41) associated with the building (3, 31) for issuing commands (17, 53a, 53b, 53c, 57a, 57b, 57c, 57d, 57e) for controlling a function of the device (33, 35, 37, 59a, 59b, 59c) and/or of the system, wherein the device (33, 35, 37, 59a, 59c, 59c) or system is configured to selectively change its condition as a function of the control commands of the control devices (23, 25, 27, 41), wherein devices for recording (23, 35, 39) the control demands (17, 53a, 53b, 53c, 57a, 57b, 57c, 57d, 57e) of the control device (23, 25, 27 41) are provided and association devices (23, 25, 39) are provided which enable a user (45) of the arrangement (1) to associate one or plural of the recorded control commands (17, 53a, 53b, 53c, 57a, 57b, 57c, 57d, 57e) with a selectable control routine (15, 51, 55), **characterized in that** devices for identifying (23, 25) interrelated control commands (53a, 53b, 53c, 57a, 57b, 57c, 57d, 57e) are provided which propose to the user (45) to associate the interrelated control commands (53a, 53b, 53c, 57a, 57b, 57c, 57d, 57e) with the control routine (51, 55), wherein the devices for identification (23, 25) are configured to identify control commands (53a, 53b, 53c, 57a, 57b, 57c, 57d, 57e) as interrelated which are issued within a predetermined time period and/or for systems or devices (35, 37, 59a, 59b, 59c) of a particular space (7).

2. Arrangement (1) according to claim 1, **characterized in that** display devices (25) are provided for displaying the control commands (17, 53a, 53b, 53c, 57a, 57b, 57c, 57d, 57e) in a selected time period, in particular an elapsed time period.

3. Arrangement (1) according to claim 1 or 2, **characterized in that** the devices for recording (23, 25, 39) the control commands (17, 53a, 53b, 53c, 57a, 57b, 57c, 57d, 57e) are configured to record only the control commands (17, 53a, 53b, 53c, 57a, 57b, 57c, 57d, 57e) initiated by the user (45).

4. Arrangement (1) according to one of the preceding claims, **characterized in that** the predetermined time period is 15 minutes at the most, advantageously 10 minutes at the most, in particular 5 minutes at the most.

5. Arrangement (1) according to one of the preceding claims, **characterized in that** the devices for recording (23, 25) are configured so that the starting point and/or the end point of the recording is determinable by the user (45), wherein it is advantageously provided that the devices for association (23, 25) are configured to associate all such recorded control commands with the control routine.

6. Arrangement (1) according to one of the preceding claims, **characterized in that** the control devices (23, 25, 27, 41) are configured to automatically execute the control routine (15, 51, 55) at a predetermined point in time and/or directly after activation by the user (45).

7. Arrangement (1) according to one of the preceding claims, **characterized in that** arrangement (1) is configured to enable the user (45) to remove control commands (17, 53a, 53b, 53c, 57a, 57b, 57c, 57d, 57e) from an existing control routine (15, 51, 55) or to associate the control commands with the control routine.

8. Method for controlling electronically controllable devices (33, 35, 37, 59a, 59b, 59c) and systems in public and private buildings (3, 31) wherein at least one device (33, 35, 37, 59a, 59b, 59c) and/or system associated with the building (3, 31) and control devices (23, 25, 27, 41) for issuing commands (17, 53a, 53b, 53c, 57a, 57b, 57c, 57d, 57e) for controlling a function of the device (33, 35, 37, 59a, 59b, 59c) and/or the system are provided, wherein the device or system is configured for selectively changing its condition as a function of control commands (17, 53a, 53b, 53c, 57a, 57b, 57c, 57d, 57e) of the control devices (23, 25, 27, 41), wherein the control commands (17, 53a, 53b, 53c, 57a, 57b, 57c, 57d, 57e) of the control device (23, 25, 27, 41) are recorded and a user (45) can associate one or plural of the recorded control commands (17, 53a, 53b, 53c, 57a, 57b, 57c, 57d, 57e) with a selectable control routine (15, 51, 55), **characterized in that** interrelated control commands (53a, 53b, 53c, 57a, 57b, 57c, 57d, 57e) are identified (23, 25) and it is proposed to the user (45) to associate the interrelated control commands (53a, 53b, 53c, 57a, 57b, 57c, 57d, 57e) with the control routine (51, 55), wherein the control commands (53a, 53b, 53c, 57a, 57b, 57c, 57d, 57e) which are issued within a predetermined time period and/or for systems or devices (35, 37, 59a, 59b, 59c) of a particular space (7) are identified as interrelated.

9. The method according to claim 8, **characterized in that** the arrangement according to one of the claims 1 through 7 is being used.

## Revendications

1. Mécanisme (1) destiné à la commande d'appareils (33, 35, 37, 59a, 59b, 59c) et de systèmes pouvant être commandés de manière électronique dans des bâtiments (3, 31) publics et privés, comprenant au moins un appareil (33, 35, 37, 59a, 59b, 59c) et/ou un système attribués au bâtiment (3, 31), ainsi que des moyens de commande (23, 25, 27, 41) en vue de l'émission d'instructions (17, 53a, 53b, 53c, 57a, 57b, 57c, 57d, 57e), lesquelles sont destinées à la commande du fonctionnement de l'appareil (33, 35, 37, 59a, 59b, 59c) et/ou du système, selon lequel l'appareil (33, 35, 37, 59a, 59b, 59c) ou le système est conçu en vue de la modification sélective de son état en fonction des instructions de commande des moyens de commande (23, 25, 27, 41), selon lequel des moyens destinés à l'enregistrement (23, 25, 39) des instructions de commande (17, 53a, 53b, 53c, 57a, 57b, 57c, 57d, 57e) des moyen de commande (23, 25, 27, 41) sont prévus et selon lequel des moyens destinés à l'attribution (23, 25, 39) sont prévus, au moyen desquels un utilisateur (45) peut associer au mécanisme (1) l'une ou plusieurs des instructions de commande (17, 53a, 53b, 53c, 57a, 57b, 57c, 57d, 57e) enregistrées d'une routine de commande (15, 51, 55) pouvant être sélectionnée,
**caractérisé en ce que**
des moyens destinés à l'identification (23, 25) des instructions de commande (53a, 53b, 53c, 57a, 57b, 57c, 57d, 57e) y associées sont prévus, lesquels proposent à l'utilisateur (45) l'attribution de ces instructions de commande (53a, 53b, 53c, 57a, 57b, 57c, 57d, 57e) y associées avec la routine de commande (51, 55), selon lequel les moyens destinés à l'identification (23, 25) sont conçus en vue d'identifier des instructions de commande (53a, 53b, 53c, 57a, 57b, 57c, 57d, 57e) comme étant y associées, lesquelles sont données durant une période prédéfinie et/ou sont données pour des systèmes ou des appareils (35, 37, 59a, 59b, 59c) d'un espace (7) déterminé.

2. Mécanisme (1) selon la revendication 1, **caractérisé en ce que** des moyens d'affichage (25) destinés à l'affichage des instructions de commande (17, 53a, 53b, 53c, 57a, 57b, 57c, 57d, 57e) sont prévus dans une période de temps sélectionnée, en particulier dans une période de temps écoulée.

3. Mécanisme (1) selon la revendication 1 ou 2,
**caractérisé en ce que** les moyens destinés à l'enregistrement (23, 25, 39) des instructions de commande (17, 53a, 53b, 53c, 57a, 57b, 57c, 57d, 57e) ne sont conçus qu'en vue de l'enregistrement des instructions de commande (17, 53a, 53b, 53c, 57a, 57b, 57c, 57d, 57e) déclenchées par l'utilisateur (45).

4. Mécanisme (1) selon l'une des revendications précédentes, **caractérisé en ce que** la période définie s'élève à 15 min.au plus, s'élève de préférence à 10 min. au plus, s'élève en particulier à 5 min. au plus.

5. Mécanisme (1) selon l'une des revendications précédentes, **caractérisé en ce que** les moyens destinés à l'enregistrement (23, 25) sont conçus de telle sorte que le point de départ et/ou le point final de l'enregistrement peuvent être déterminés par l'utilisateur (45), selon lequel il est prévu, de préférence, que les moyens destinés à l'attribution (23, 25) soient adaptés en vue d'associer toutes les instructions de commande ainsi enregistrées de la routine de commande.

6. Mécanisme (1) selon l'une des revendications précédentes, **caractérisé en ce que** les moyens de commande (23, 25, 27, 41) sont adaptés en vue d'exécuter automatiquement la routine de commande (15, 51, 55) à un moment pouvant être prédéfini au préalable et/ou directement après l'activation par l'utilisateur (45).

7. Mécanisme (1) selon l'une des revendications précédentes, **caractérisé en ce que** le mécanisme (1) est adapté de telle sorte que l'utilisateur (45) puisse supprimer des instructions de commande (17, 53a, 53b, 53c, 57a, 57b, 57c, 57d, 57e) à partir d'une routine de commande (15, 51, 55) existante ou de telle sorte qu'il puisse les attribuer.

8. Procédé destiné à la commande d'appareils (33, 35, 37, 59a, 59b, 59c) et de systèmes pouvant être commandés de manière électronique dans des bâtiments (3, 31) publics et privés, selon lequel au moins un appareil (33, 35, 37, 59a, 59b, 59c) et/ou un système attribué au bâtiment (3, 31), ainsi que des moyens de commande (23, 25, 27, 41) sont prévus en vue de l'émission d'instructions (17, 53a, 53b, 53c, 57a, 57b, 57c, 57d, 57e) destinées à la commande du fonctionnement de l'appareil (33, 35, 37, 59a, 59b, 59c) et/ou du système, selon lequel l'appareil ou le système est conçu en vue de la modification sélective de son état en fonction des instructions de commande (17, 53a, 53b, 53c, 57a, 57b, 57c, 57d, 57e) des moyens de commande (23, 25, 27, 41), selon lequel les instructions de commande (17, 53a, 53b, 53c, 57a, 57b, 57c, 57d, 57e) des moyens de commandes (23, 25, 27, 41) sont enregistrées et un utilisateur (45) du procédé peut associer l'une ou plusieurs des instructions de commande (17, 53a, 53b, 53c, 57a, 57b, 57c, 57d, 57e) enregistrées d'une routine de commande (15, 51, 55) pouvant être sélectionnée,
**caractérisé en ce que**
des instructions de commande (53a, 53b, 53c, 57a, 57b, 57c, 57d, 57e) y associées sont identifiées (23, 25) et proposent à l'utilisateur (45) l'attribution de ces instructions de commande (53a, 53b, 53c, 57a, 57b, 57c, 57d, 57e) y associées avec la routine de commande (51, 55), selon lequel les instructions de commande (53a, 53b, 53c, 57a, 57b, 57c, 57d, 57e) sont identifiées comme étant y associées, lesquelles sont données durant une période prédéfinie et/ou sont données pour des systèmes ou des appareils (35, 37, 59a, 59b, 25 59c) d'un espace (7) déterminé.

9. Procédé selon la revendication 8, **caractérisé en ce que** le mécanisme (1) est utilisé conformément à l'une des revendications 1 à 7.
